# EUROPÄISCHE PATENTANMELDUNG

(11) **EP 4 050 315 A1**
(43) Veröffentlichungstag der Anmeldung: **31.08.2022**
(21) Anmeldenummer: 21159586.3
(22) Anmeldetag: 26.02.2021
(51) Int. Cl.: G01M 13/025

(54) **ÜBERLASTSCHUTZ FÜR ANTRIEBSPRÜFSTÄNDE**

(71) Anmelder: Flender GmbH, 46395 Bocholt (DE)
(72) Erfinder: Hambrecht, Ralf, 46399 Bocholt (DE)
(74) Vertreter: Michalski Hüttermann & Partner Patentanwälte mbB

(57) **Zusammenfassung**

Die Erfindung betrifft eine Rotorlagereinheit (1) für die Prüfung einer Antriebskomponente (2). Zur Verbesserung der Anordnung für die Prüfung der Antriebskomponente (2) wird vorgeschlagen, dass die Rotorlagereinheit (1) einen Wellenteil (11), einen Führungskasten (12) und ein Gehäuseteil (13) aufweist, wobei der Wellenteil (11) gegenüber dem Gehäuseteil (13) drehbar angeordnet ist, wobei das Gehäuseteil (13) reibschlüssig mit dem Führungskasten (12) verbunden ist, wobei das Gehäuseteil (13) der Rotorlagereinheit (1) zur kraftschlüssigen und/oder formschlüssigen Verbindung mit einem Gehäuse (21) der zu prüfenden Antriebskomponente (2) eingerichtet ist, wobei der Wellenteil (11) der Rotorlagereinheit (1) zur kraftschlüssigen und/oder formschlüssigen Verbindung mit einer Welle (22) der zu prüfenden Antriebskomponente (2) eingerichtet ist. Ferner betrifft die Erfindung einen Prüfaufbau (3) mit einer derartigen Rotorlagereinheit (1), wobei der Prüfaufbau (3) ferner die zu prüfende Antriebskomponente (2), insbesondere das Getriebe oder das Planetengetriebe, aufweist, wobei das Gehäuseteil (13) der Rotorlagereinheit (1) kraftschlüssig und/oder formschlüssig mit dem Gehäuse (21) der zu prüfenden Antriebskomponente (2) verbunden ist, wobei der Wellenteil (11) der Rotorlagereinheit (1) kraftschlüssig und/oder formschlüssig mit der Welle (22) der zu prüfenden Antriebskomponente (2) verbunden ist.

## Beschreibung

Die Erfindung betrifft eine Rotorlagereinheit für die Prüfung einer Antriebskomponente. Ferner betrifft die Erfindung einen Prüfaufbau mit einer derartigen Rotorlagereinheit, wobei der Prüfaufbau ferner die zu prüfende Antriebskomponente aufweist.

Heutzutage werden Antriebskomponenten wie beispielsweise ein Getriebe, eine Getriebe-Generator Kombinationen oder auch ein Generator als Modul oder Module in integrierten Systemen getestet. Dies gilt insbesondere für Antriebskomponenten von Windkraftanlagen, die aufgrund ihrer Leistungsfähigkeit und ihres Aufbaus in Modulen getestet werden. Bei derartigen Systemen ist das Getriebe häufig zwischen einem Generator und einer Rotorlagerung des Antriebsstrangs angeordnet. Die Antriebskomponenten sind dabei kraft- und/oder formschlüssig mit den angrenzenden Wellen verbunden. Das Getriebe ist dabei oftmals als Planetengetriebe ausgebildet. Im Rahmen der Entwicklungsprüfungen oder der Serienabnahmeprüfungen wird das System unter Drehzahl und oftmals auch unter Drehmoment in einem Verspannkreis getestet.

Kommt es zu einem Störfall, so kann ein abruptes Abbremsen der Welle erforderlich werden. Die dafür notwenigen Kräfte werden von der Rotorlagereinheit aufgenommen und in das Fundament der Rotorlagereinheit bzw. des Prüfaufbaus eingeleitet. Die dabei auftretenden Kräfte und Momente müssen von der Tragstruktur in der Schnittstelle zum Fundament ertragen werden können und vom Fundament auch schadfrei aufgenommen werden können. Die entsprechenden Komponenten müssen daher auf diese mechanische Belastung ausgelegt werden, andernfalls können aufgrund der Belastung Komponenten brechen und die gespeicherte kinetische Energie des Systems würde unkontrolliert frei werden, beispielsweise durch umherfliegende Bruchstücke. Aus sicherheitstechnischen Betrachtungen ist dieser Zustand äußerst bedenklich.

Um das Risiko zu beherrschen werden heutzutage Sicherheitskupplungen bzw. Rutschkupplungen eingesetzt, um beispielsweise die Module Getriebe und Generator voneinander abzusichern und im Störfall voneinander zu trennen.

Im Folgenden wird zwischen einem Testen und Prüfen von Komponenten nicht unterschieden.

Der Erfindung liegt die Aufgabe zugrunde, die Anordnung für die Prüfung einer Antriebskomponente zu verbessern.

Diese Aufgabe wird durch eine Rotorlagereinheit für die Prüfung einer Antriebskomponente gelöst, wobei die Rotorlagereinheit einen Wellenteil, einen Führungskasten und ein Gehäuseteil aufweist, wobei der Wellenteil gegenüber dem Gehäuseteil drehbar angeordnet ist, wobei das Gehäuseteil reibschlüssig mit dem Führungskasten verbunden ist, wobei das Gehäuseteil der Rotorlagereinheit zur kraftschlüssigen und/oder formschlüssigen Verbindung mit einem Gehäuse der zu prüfenden Antriebskomponente eingerichtet ist, wobei der Wellenteil der Rotorlagereinheit zur kraftschlüssigen und/oder formschlüssigen Verbindung mit einer Welle der zu prüfenden Antriebskomponente eingerichtet ist. Ferner wird diese Aufgabe durch einen Prüfaufbau mit einer derartigen Rotorlagereinheit gelöst, wobei der Prüfaufbau ferner die zu prüfende Antriebskomponente, insbesondere das Getriebe oder das Planetengetriebe, aufweist, wobei das Gehäuseteil der Rotorlagereinheit kraftschlüssig und/oder formschlüssig mit dem Gehäuse der zu prüfenden Antriebskomponente verbunden ist, wobei der Wellenteil der Rotorlagereinheit kraftschlüssig und/oder formschlüssig mit der Welle der zu prüfenden Antriebskomponente verbunden ist.

Weitere vorteilhafte Ausgestaltungen der Erfindung sind in den abhängigen Ansprüchen angegeben.

Der Erfindung liegt unter anderem die Erkenntnis zugrunde, dass es mit der vorgeschlagenen Anordnung möglich ist, die mechanische Belastung der Antriebskomponenten und des Fundaments zu reduzieren. Die Erfindung ermöglicht es, Prüfaufbauten von Systemen im Störfall zu schützen auch bei geringer Belastbarkeit der Komponenten, beispielsweise des Fundaments, ohne dass die tragenden Strukturen mit zu hohen Lasten beaufschlagt werden und unkontrollierte Bewegungen oder Zerstörungen hervorrufen könnten.

Dazu weist die Rotorlagereinheit im Wesentlichen den Wellenteil, den Führungskasten und das Gehäuseteil auf. Der Wellenteil wird mit der Welle der zu prüfenden Antriebskomponente verbunden und kann diese lagern. Dabei handelt es sich beispielsweise um die Eingangswelle eines Getriebes, insbesondere eines Planetengetriebes. Bei der Eingangswelle kann es sich beispielsweise um den Planetenträger eines Planetengetriebes handeln. Bei dem Planetengetriebe als Antriebskomponente kann darüber hinaus auch die Zentrierung der Welle durch die Rotorlagereinheit erfolgen. Der Wellenteil ist beispielsweise über Lager drehbar mit dem Gehäuseteil verbunden. Der Wellenteil kann daher während der Tests rotieren. Das Gehäuseteil und der Führungskasten sind reibschlüssig miteinander verbunden. Dabei sind diese Komponenten horizontal und vertikal gegeneinander fixiert. Wirkt nun ein Drehmoment zwischen Gehäuseteil und Führungskasten, so wirkt an der Grenze zwischen Gehäuseteil und Führungskasten eine Kraft. Übersteigt diese die Kraft, die durch den Reibschluss entsteht, so kann das Gehäuseteil gegenüber dem Führungskasten eine Rotationsbewegung um dessen eigene Achse vollziehen. Dies wird für den Fehlerfall ausgenutzt, wenn es beispielsweise zu einem Blockieren des Getriebes oder der Lagerung des Rotors im Generator kommt. Durch diese Blockade in der Antriebskomponente wie beispielsweise in der Verzahnung des Getriebes oder der Rotorlagerung des Generator-Rotors wirkt eine kinetische Energie der rotierenden Schwungmassen als Stoßimpuls auf die Tragstruktur in der Verbindung zum Fundament.

Durch die Verbindung des Gehäuseteils mit dem Gehäuse der zu prüfenden Antriebskomponente, beispielsweise mittels eines Flansches, entsteht ein entsprechendes Drehmoment zwischen dem Gehäuseteil und dem Führungskasten, das bewirkt, dass das Gehäuseteil gegenüber dem Führungskasten rotiert. Damit können die enormen dynamischen Kräfte für die abrupte Abbremsung der rotierenden Schwungmassen im Antriebsstrang des Testaufbaus vermieden werden, die durch die Abstützstruktur in Verbindung zum Fundament und dem Fundament selbst ertragen werden müssten und dort im Falle einer Überlastung zu einem Schaden führen können.

Mit steigender Größe, Leistungsfähigkeit und Masse der eingesetzten Komponenten im Prüfaufbau werden die Rotationsenergien im System so hoch, dass in Verbindung mit einem Störfall ein abruptes Abbremsen durch die umgebenden Strukturen festigkeitstechnisch nicht für jede Höhe der Masse, insbesondere für die rotierende Masse, sichergestellt werden kann. Die Komponenten, die durch einen derartigen Störfall zu hoch belastet würden, unterliegen dem Risiko eines Bruchs und die gespeicherte kinetische Energie des Systems würde in einer unkontrollierten Bewegung großer Massen resultieren. Derartige Prüfungen finden in Fertigungs- und Montagehallen statt. Dies würde sowohl ein Sicherheitsrisiko für die in der Umgebung arbeitenden Personen darstellen als auch hohe Sachschäden im Störfall nach sich ziehen können. Durch den vorgeschlagenen Aufbau kann die Sicherheit vor einem Bruch und unkontrollierten Bewegungen von Bruchstücken zuverlässig vermieden werden. Dadurch ist auch die Aufstellung derartiger Prüfaufbauten in Fertigungs- und Montagehallen ohne weitere festigkeitserhöhende Maßnahmen und damit einhergehenden Überdimensionierung zur Beseitigung oder Reduzierung des zuvor beschriebenen Gefährdungspotentials möglich.

Handelt es sich beispielsweise um einen Wuchttest des Generators im System bei Nenndrehzahl, könnte ein Störfall im Getriebe beispielsweise durch Verkeilen von Bruchstücken in den Verzahnungen zu einem plötzlichen Auftreten hoher Lasten führen, die nötig werden, um das System in seiner Position zu halten.

Durch die vorgeschlagene Rotorlagereinheit wird die in den Systemen gespeicherte kinetische Energie bei einem Störfall, wie beispielsweise einer internen Blockierung im Getriebe, in Wärme und Rotationsenergie eines erweiterten Systems um eine definierte Achse umgewandelt.

Dabei kann das zu prüfende Antriebssystem aus einem Planetengetriebe mit optional angekoppeltem Generator zur Funktions- und Lastprüfung einem abschließenden Last- und Drehzahltest unterzogen werden. Gleiches kann ebenfalls für einen Getriebe, eine Getriebe-Generatorkombination oder auch nur einen Generator durchgeführt werden.

Mit der vorgeschlagenen Anordnung erzeugt man einen geschlossenen Torsionsverspannkreis bei dem das Gehäuseteil so gestaltet ist, dass es in einem Führungskasten zwar in seiner horizontalen und vertikalen Position fixiert ist, aber bei einem Störfall eine Drehbewegung des erweiterten Systems ermöglicht. Im normalen ungestörten Test- oder Prüflauf dreht nur der Wellenteil und das Gehäuseteil steht still. Kommt es beispielsweise im Getriebe zu einer Abwälzstörung oder Blockierung, würde das Gehäuseteil als Momentanpol fungieren und Kräfte aus der gespeicherten kinetischen Energie über die Stützstruktur in das Fundament einleiten wollen. Dies und eine damit einhergehende mögliche Überlastung der Stützstruktur wird durch die vorgeschlagene Anordnung dadurch verhindert, dass das Gehäuseteil derart reibschlüssig mit dem Führungskasten verbunden ist, dass eine freie Rotation bei Überlast ermöglicht. Insbesondere ist eine reine reibschlüssige Verbindung zwischen dem Gehäuseteil und dem Führungskasten vorteilhaft, weil damit unter allen Betriebsbedingungen die freie Rotation bei Überlast ermöglicht werden kann.

Die bisherigen Tragstrukturen sind derart ausgeführt bzw. dimensioniert, dass Kräfte und Momente resultierend aus möglichen Störfällen, z.B. Blockierung im Getriebe oder im Generatorrotor, abgefangen und in das Fundament weitergeleitet werden können. Mit dem vorgeschlagenen Prüfaufbau können auch in Bezug auf die Nennleistung größere Systeme mit entsprechend größeren Trägheitsmomenten und/oder Rotationsenergien auf dem Prüfstand mit der vorgeschlagenen Rotorlagereinheit getestet werden. Mit anderen Worten kann die Leistungsfähigkeit des Prüfstands mit Hilfe der vorgeschlagenen Anordnung deutlich vergrößert werden.

Durch den einstellbaren Abstand und der geeigneten Wahl der kontaktierenden Materialien zwischen Führungskasten und Gehäuseteil können die auftretenden Lasten so eingestellt werden, dass die im Kraftschluss befindlichen Bauteile nicht überlastet werden. Zu diesen Bauteilen zählen insbesondere Verschraubungen der Füße zum Fundament, die durch eine Überlastung gefährdet wären.

Im Vergleich zu einer Rutschkupplung als Überlastkupplung, wie sie beispielsweise bei aufgelösten high-speed Triebsträngen zum Einsatz kommt, ist der Aufbau des Prüfstands mit der vorgeschlagene Rotorlagereinheit bzw. der Prüfaufbau, insbesondere für integrierte Hybriden-Systeme aus einem Getriebe/Generatorsystem, unter Berücksichtigung der diskutierten Sicherheitsaspekte deutlich kostengünstiger.

Zur Erlangung einer CE-Kennzeichnung von Prüfaufbauten ist es notwendig, Störfälle sicher abzufangen. Dazu wird in einer Risiko-/Gefährdungsbeurteilung beschrieben, wie dieser Störfall abgesichert wird. Da das Gefährdungspotential durch Bruch und umherfliegenden Teilen durch den Aufbau der Rotorlagereinheit bzw. des Prüfaufbaus allein aus physikalischen Betrachtungen sicher vermieden wird, ist der Nachweis darüber entsprechend leicht zu führen.

Für den Aufbau des Prüfstands mit der oder den zu prüfenden Antriebskomponenten hat es sich als vorteilhaft erwiesen, stationäre Versorgungsleitungen zu den Prüflingen wie beispielsweise eine Schmierstoffversorgung sowie dessen Rückführung, eine Sensorik oder eine elektrische Leistungsversorgung so auszuführen, dass diese bei Detektion einer beginnenden Drehbewegung des Gehäuseteils gegenüber dem Führungskasten einfach und sicher zum stationären Teil aufgetrennt werden.

Bei einer weiteren vorteilhaften Ausgestaltung der Erfindung ist die zu prüfende Antriebskomponente ein Getriebe, insbesondere ein Planetengetriebe. Die Erfahrung hat gezeigt, dass die Gefahr einer Blockade für ein Getriebe im Vergleich zu einer Blockade des Rotors eines Generators gerade in einem Prüfaufbau höher ist. Somit hat sich die Verwendung der vorgeschlagenen Rotorlagereinheit gerade für Getriebe und insbesondere für Planetengetriebe als besonders vorteilhaft erwiesen. Durch den Prüfaufbau können bei Getrieben gerade auch Folgeschäden bei Auftreten eines Störfalls zuverlässig verhindert werden.

Bei einer weiteren vorteilhaften Ausgestaltung der Erfindung weist der Führungskasten einen ersten Teil und einen zweiten Teil aufweist, wobei die Höhe eines Reibschlusses der reibschlüssigen Verbindung durch einen vorgebbaren Abstand zwischen dem ersten Teil und dem zweiten Teil des Führungskastens und/oder durch die tribologische Kontaktgestaltung zwischen dem Gehäuseteil und dem Führungskasten einstellbar ist. Die Höhe des Reibschlusses kann durch den Abstand und die tribologische Kontaktgestaltung erfolgen. Der Abstand kann beispielsweise durch eine Schraubverbindung einstellbar ausgeführt sein. Die Materialien bzw. die Oberflächenbeschichtung werden dabei derart gewählt, dass die Ädhäsions-/Fressneigung gering ist und gute Notlaufeigenschaften aufweist. Durch diese Einstellmöglichkeit ist der Prüfaufbau an die Leistungsfähigkeit bzw. physikalische Eigenschaften der Komponenten wie beispielsweise Nennleistung oder Trägheitsmoment anpassbar. Ebenso können die Gegebenheiten vor Ort, wie die Dimensionierung des Fundaments oder der Trag- oder Stützstruktur berücksichtigt werden, um sicherheitskritische Zustände wie beispielsweise den Bruch von Komponententeilen zu vermeiden.

Bei einer weiteren vorteilhaften Ausgestaltung der Erfindung ist die zu prüfende Antriebskomponente oder das Getriebe für die Anwendung in einer Windkraftanlage vorgesehen. Die Anordnung des Prüfstands und des Prüfaufbaus eignen sich in besonderer Weise für das Prüfen und/oder das Testen von einer oder mehreren Antriebskomponenten wie beispielsweise dem Generator oder dem Getriebe, insbesondere dem Planetengetriebe, einer Windkraftanlage. Diese Antriebskomponenten werden in relativ großer Stückzahl produziert und die Anforderungen an die Zuverlässigkeit sind wegen der schwer zugänglichen Anordnung der Antriebskomponenten auf dem Turm bzw. in der Gondel einer Windkraftanlage besonders hoch. Darüber hinaus gibt es auch zahlreiche Anforderungen bezüglich einer Zertifizierung, die Tests unter definierten Randbedingungen erfordern. Diese Randbedingungen können auf dem Prüfstand bzw. an dem Prüfaufbau eingestellt werden, so dass sich dieser Prüfstand bzw. dieser Prüfaufbau im besonderen Maße für Messungen und Tests an einem Planetengetriebe für Windkraftanwendungen eignet und vorteilhaft ist.

Bei einer weiteren vorteilhaften Ausgestaltung der Erfindung ist die Nennleistung der zu prüfenden Antriebskomponente größer als 3 MW. Bei größeren Systemen ab einer Nennleistung von mehr als 3 MW sind die Rotationsenergien während des Prüf- oder Testvorgangs so hoch, dass ein besonders großer Aufwand betrieben werden müsste, diese Störfälle über die notwendige Tragstruktur abzufangen und ins Fundament einzuleiten. Durch die Anwendung des vorgeschlagenen Prüfstands bzw. des vorgeschlagenen Prüfaufbaus müssen die Komponenten des Prüfaufbaus wie die Rotorlagereinheit nicht mehr für diesen Störfall dimensioniert werden und können leichter und kostengünstiger realisiert werden.

Bei einer weiteren vorteilhaften Ausgestaltung der Erfindung ist der Prüfaufbau in einer back-to-back Anordnung angeordnet. Mit dieser Anordnung ist es möglich, gleichzeitig mindestens zwei Antriebskomponenten wie beispielsweise Getriebe, insbesondere zwei Planetengetriebe, zu prüfen. Der Prüfstand bzw. der Prüfaufbau ist bei dem back-to-back Aufbau symmetrisch bezüglich der zentral angeordneten Rotorlagereinheit ausgeführt. Auch die Rotorlagereinheit kann in diesem Fall symmetrisch ausgeführt sein. An beiden Seiten der Rotorlagereinheit wird jeweils die entsprechende Antriebskomponente oder die Antriebskomponenten angeordnet. Dabei ist es vorteilhaft, für die back-to-back Anordnung auch zwei elektrische Maschinen vorzusehen, zwischen denen die zu prüfenden Antriebskomponenten wie Getriebe bzw. Planetengetriebe und die Rotorlagereinheit, insbesondere symmetrisch, angeordnet sind. Durch die mindestens zwei zu prüfenden Antriebskomponenten dieser Anordnung, die über die jeweiligen Wellen miteinander verbunden sind, erhöht sich auch die Rotationsenergie, die durch die Rotorlagereinheit abgebaut werden muss. Mit dem vorgeschlagenen Aufbau der Rotorlagereinheit und des Prüfaufbaus können die betrachteten Sicherheitsaspekte auch bei diesen deutlich erhöhten Rotationsenergien sicher beherrscht werden.

Ein Beispiel für eine Back-to-back Anordnung ist eine Getriebeverspannprüfung im System, bei der zwei Systeme back-to-back verspannt sind und beispielsweise als Serienprüfung "end of line" zum Einsatz kommen.

Bei einer weiteren vorteilhaften Ausgestaltung der Erfindung ist die zu prüfende Antriebskomponente mit einer elektrischen Maschine gekoppelt. Die elektrische Maschine erlaubt es, ein Drehmoment auf die zu prüfende Antriebskomponente zu übertragen und damit beispielsweise das Getriebe im gewünschten Arbeitspunkt zu betreiben. Auf diese Weise können test- bzw. Prüfpunkte auf einfache Weise angefahren und abgearbeitet werden. Darüber hinaus ist auch die Welle der elektrischen Maschine über den Aufbau der Rotorlagereinheit gegenüber einem Blockieren und damit einhergehenden Zerstörung abgesichert. Besonders vorteilhaft ist die Anordnung von zwei elektrischen Maschinen, beispielsweise in einem back-to-back Aufbau. Dann können Drehmoment und Drehzahl unabhängig voneinander auf das Getriebe oder die Getriebe gegeben werden.

Die elektrische Maschine kann dabei auf dem Fundament des Prüfstands lagern. Mit anderen Worten steht die elektrische Maschine auf dem Fundament und leitet, zumindest im Stillstand, seine Gewichtskraft dort ein. Alternativ ist es auch möglich, die elektrische Maschine über das Gehäuse oder, je nach Aufbau, die Gehäuse weiterer Antriebskomponenten an der Rotorlagereinheit zu lagern und die Gewichtskraft im Stillstand über die Rotorlagereinheit in das Fundament einzuleiten.

Im Folgenden wird die Erfindung anhand der in den Figuren dargestellten Ausführungsbeispiele näher beschrieben und erläutert. Es zeigen:
- FIG 1 und FIG 2: unterschiedliche Sichten auf eine Rotorlagereinheit und
- FIG 3: einen Prüfaufbau.

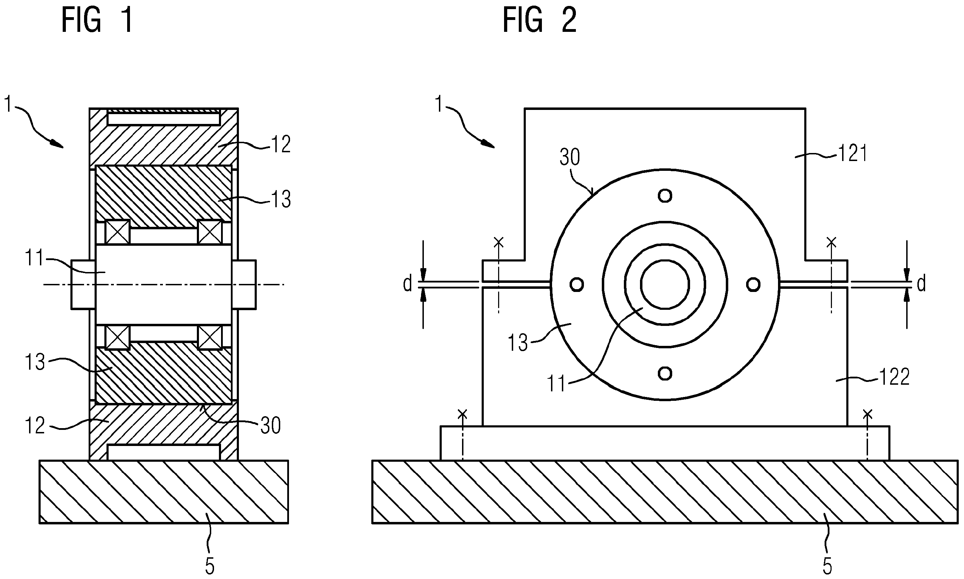

Die FIG 1 zeigt eine Rotorlagereinheit 1. Die Rotorlagereinheit 1 steht auf einem Fundament 5 und weist einen Wellenteil 11, einen Führungskasten 12 und ein Gehäuseteil 13 auf. Der Wellenteil 11 ist gegenüber dem Gehäuseteil 13 drehbar angeordnet, insbesondere drehbar gelagert. Das Gehäuseteil 13 ist mit dem Führungskasten 12 reibschlüssig verbunden, so dass an der Grenze zwischen Gehäuseteil 13 und Führungskasten 12 eine reibschlüssige Verbindung 30 vorhanden ist. Die FIG 2 zeigt eine weitere Sicht auf die Rotorlagereinheit 1. Zur Vermeidung von Wiederholungen wird auf die Beschreibung zur FIG 1 sowie auf die dort eingeführten Bezugszeichen verwiesen. Der Führungskasten 12 kann sich dabei in einen ersten Teil 121 des Führungskastens 12 und in einen zweiten Teil 122 des Führungskastens 12 aufteilen. Durch einen einstellbaren und vorgebbaren Abstand d zwischen dem ersten Teil 121 und dem zweiten Teil 122 kann die Höhe des Reibschlusses der reibschlüssigen Verbindung 30 zwischen dem Gehäuseteil 13 und dem Führungskasten 12, der durch den ersten Teil 121 und zweiten Teil 122 gebildet wird, eingestellt werden. Eine weitere Möglichkeit, die Höhe des Reibschlusses der reibschlüssigen Verbindung 30 zu verändern, besteht in der tribologischen Ausgestaltung der reibschlüssigen Verbindung 30 zwischen dem Führungskasten 12 und dem Gehäuseteil 13.

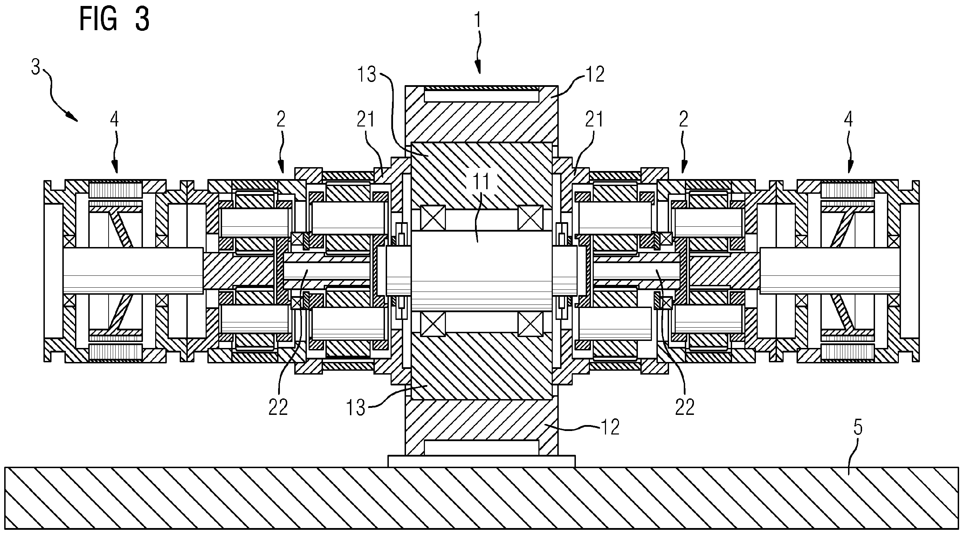

Die FIG 3 zeigt einen Prüfaufbau 3 mit einer Rotorlagereinheit 1. Zur Vermeidung von Wiederholungen wird auf die Beschreibung zu den Figuren 1 und 2 sowie auf die dort eingeführten Bezugszeichen verwiesen. Die zu prüfende Antriebskomponente 2 ist in diesem Ausführungsbeispiel ein Getriebe, hier als Planetengetriebe ausgebildet. Die zu prüfende Antriebskomponente 2 ist mit einer elektrischen Maschine 4 verbunden, mit der die Test- oder Prüfbedingungen in Form von Drehmoment und Drehzahl auf zu prüfende Antriebskomponente 2 gegeben werden können. Die andere Seite des Planetengetriebes, also der zu prüfenden Antriebskomponente 2, ist mit der Rotorlagereinheit 1 verbunden, so dass die Welle 22 des Getriebes 2 beispielsweise durch die Rotorlagereinheit 1 oder durch eine Lagerung im Getriebe drehbar gelagert wird. Das Gehäuse 21 der zu prüfenden Antriebskomponente 2 wird beispielsweise mittels eines Flansches mit der Rotorlagereinheit 1 verbunden und kann darüber im dynamischen Betrieb auch die Drehmomentrückführung bis in das Fundament 5 sicherstellen.

Erst im Störfall, wenn beispielsweise die Welle 22 sich im Getriebe verkeilt, entsteht eine Kraft zwischen der Welle 22 und dem Gehäuse 21 des Getriebes. Diese Kraft liegt aufgrund der kraftschlüssigen und/oder formschlüssigen Verbindungen zwischen dem Wellenteil 11 der Rotorlagereinheit 1 und der Welle 22 der zu prüfenden Antriebskomponente 2 sowie zwischen dem Gehäuseteil 13 der Rotorlagereinheit 1 und dem Gehäuse 21 der zu prüfenden Antriebskomponente 2 auch an der reibschlüssigen Verbindung 30, d.h. zwischen dem Gehäuseteil 13 und dem Führungskasten 12, an. Übersteigt diese Kraft den Wert, den die reibschlüssige Verbindung 30 aufnehmen kann, dann kann sich das Gehäuseteil 13 gegenüber dem Führungskasten 12 bewegen, also mit dem Wellenteil 11 rotieren. Damit wird die Kraft, die über die Trag- bzw. Stützstruktur auf das Fundament 5 übertragen wird, limitiert. Der Vorteil der Rotation des Gehäuseteils 13 besteht dann darin, dass die aufgrund des Störfalls wirkende Kraft zwischen Welle 22 und Gehäuse 21 nicht mehr, zumindest nicht mehr vollständig, über die Rotorlagereinheit 1 in das Fundament 5 eingeleitet werden muss. Das senkt sowohl die Anforderungen an die Festigkeit der Rotorlagereinheit 1 als auch an die Auslegung des Fundaments 5.

Der dargestellte Aufbau entspricht einer back-to-back Anordnung, bei der zwei zu prüfende Antriebskomponenten 2, in diesem Ausführungsbeispiel zwei Planetengetriebe, geprüft werden können. Der Prüfaufbau 3 ist dabei symmetrisch aufgebaut, so dass auch eine zweite elektrische Maschine 4 vorhanden ist. In der Mitte befindet sich die Rotorlagereinheit 1, die mit den Getrieben 2 verbunden ist und beispielsweise die Planetenträger der beiden Planetengetriebe 2 lagert. Somit sind beide Planetengetriebe 2 über die Rotorlagereinheit 1 miteinander verbunden. Ein derartiger Aufbau eignet sich aufgrund seiner Leistungsfähigkeit insbesondere für das Testen und Prüfen eines Windgetriebes, also eines Getriebes für die Anwendung in einer Windkraftanlage, sowie auch für Generatoren von Windkraftanlagen und entsprechenden Getriebe-Generator Kombinationen, da diese oftmals eine Nennleistung von mehr als 3 MW aufweisen. Durch die zwei elektrischen Maschinen 4 ist es möglich, Drehmoment und Drehzahl unabhängig vorzugeben, mit denen die zu prüfenden Antriebskomponenten 2 belastet oder getestet werden.

Zusammenfassend betrifft die Erfindung eine Rotorlagereinheit für die Prüfung einer Antriebskomponente. Zur Verbesserung der Anordnung für die Prüfung der Antriebskomponente wird vorgeschlagen, dass die Rotorlagereinheit einen Wellenteil, einen Führungskasten und ein Gehäuseteil aufweist, wobei der Wellenteil gegenüber dem Gehäuseteil drehbar gelagert ist, wobei das Gehäuseteil reibschlüssig mit dem Führungskasten verbunden ist, wobei das Gehäuseteil der Rotorlagereinheit zur kraftschlüssigen und/oder formschlüssigen Verbindung mit einem Gehäuse der zu prüfenden Antriebskomponente eingerichtet ist, wobei der Wellenteil der Rotorlagereinheit zur kraftschlüssigen und/oder formschlüssigen Verbindung mit einer Welle der zu prüfenden Antriebskomponente eingerichtet ist. Ferner betrifft die Erfindung einen Prüfaufbau mit einer derartigen Rotorlagereinheit, wobei der Prüfaufbau ferner die zu prüfende Antriebskomponente, insbesondere das Getriebe oder das Planetengetriebe, aufweist, wobei das Gehäuseteil der Rotorlagereinheit kraftschlüssig und/oder formschlüssig mit dem Gehäuse der zu prüfenden Antriebskomponente verbunden ist, wobei der Wellenteil der Rotorlagereinheit kraftschlüssig und/oder formschlüssig mit der Welle der zu prüfenden Antriebskomponente verbunden ist.

## Patentansprüche

1. Rotorlagereinheit (1) für die Prüfung einer Antriebskomponente (2), wobei die Rotorlagereinheit (1) einen Wellenteil (11), einen Führungskasten (12) und ein Gehäuseteil (13) aufweist, wobei der Wellenteil (11) gegenüber dem Gehäuseteil (13) drehbar angeordnet ist, wobei das Gehäuseteil (13) reibschlüssig mit dem Führungskasten (12) verbunden ist, wobei das Gehäuseteil (13) der Rotorlagereinheit (1) zur kraftschlüssigen und/oder formschlüssigen Verbindung mit einem Gehäuse (21) der zu prüfenden Antriebskomponente (2) eingerichtet ist, wobei der Wellenteil (11) der Rotorlagereinheit (1) zur kraftschlüssigen und/oder formschlüssigen Verbindung mit einer Welle (22) der zu prüfenden Antriebskomponente (2) eingerichtet ist.

2. Rotorlagereinheit (1) nach Anspruch 1, wobei die zu prüfende Antriebskomponente (2) ein Getriebe, insbesondere ein Planetengetriebe, ist.

3. Rotorlagereinheit (1) nach einem der Ansprüche 1 oder 2, wobei der Führungskasten einen ersten Teil (121) und einen zweiten Teil (122) aufweist, wobei die Höhe eines Reibschlusses der reibschlüssigen Verbindung (30) durch einen vorgebbaren Abstand (d) zwischen dem ersten Teil (121) und dem zweiten Teil (122) des Führungskastens (12) und/oder durch die tribologische Kontaktgestaltung zwischen dem Gehäuseteil (13) und dem Führungskasten (12) einstellbar ist.

4. Prüfaufbau (3) mit einer Rotorlagereinheit (1) nach einem der Ansprüche 1 oder 2, wobei der Prüfaufbau (3) ferner die zu prüfende Antriebskomponente (2), insbesondere das Getriebe oder das Planetengetriebe, aufweist, wobei das Gehäuseteil (13) der Rotorlagereinheit (1) kraftschlüssig und/oder formschlüssig mit dem Gehäuse (21) der zu prüfenden Antriebskomponente (2) verbunden ist, wobei der Wellenteil (11) der Rotorlagereinheit (1) kraftschlüssig und/oder formschlüssig mit der Welle (22) der zu prüfenden Antriebskomponente (2) verbunden ist.

5. Prüfaufbau (3) nach Anspruch 4, wobei die zu prüfende Antriebskomponente (2) ein Getriebe, insbesondere ein Planetengetriebe, ist.

6. Prüfaufbau (3) nach einem der Ansprüche 4 oder 5, wobei die zu prüfende Antriebskomponente (2) oder das Getriebe für die Anwendung in einer Windkraftanlage vorgesehen ist.

7. Prüfaufbau (3) nach einem der Ansprüche 4 bis 6, wobei die Nennleistung der zu prüfenden Antriebskomponente (2) größer ist als 3 MW.

8. Prüfaufbau (3) nach einem der Ansprüche 4 bis 7, wobei der Prüfaufbau (3) in einer back-to-back Anordnung angeordnet ist.

9. Prüfaufbau (3) nach einem der Ansprüche 4 bis 8, wobei die zu prüfende Antriebskomponente (2) mit einer elektrischen Maschine (4) gekoppelt ist.
